# EUROPÄISCHE PATENTANMELDUNG

(11) **EP 0 971 201 A1**
(43) Veröffentlichungstag der Anmeldung: **12.01.2000**
(21) Anmeldenummer: 99113027.9
(22) Anmeldetag: 06.07.1999
(51) Int. Cl.: G01B 5/012, G01B 7/34, G01B 7/13, G01B 3/00

(54) **Messtaster**

(30) Priorität: 08.07.1998 DE 29812172 U
(71) Anmelder: Ratiotec Konstruktion und Vertrieb von Sondermaschinen und Vorrichtungen GmbH, 66636 Tholey (DE)
(72) Erfinder: Busch, Helmut, 66636 Tholey (DE)
(74) Vertreter: Bernhardt, Winfrid, Dr.-Ing.

(57) **Zusammenfassung**

Die Erfindung betrifft einen Meßtaster mit einem länglichen, an einer Trägereinrichtung gehalterten Tastelement (2), das einen Tastkopf (3) aufweist, welcher zur Meßabtastung quer zur Längsachse des Tastelements verschiebbar ist.

Erfindungsgemäß umfaßt die Trägereinrichtung ein längliches, mit seiner Längsachse zur Längsachse des Tastelements (2a) ausrichtbares Trägergehäuse (1). Vorzugsweise weist das Trägergehäuse einen Klemmabschnitt zum Einspannen des Meßtasters in eine Meßtasterhalterung mit einem Spanndurchmesser von 8 mm auf.

## Beschreibung

Die Erfindung betrifft einen Meßtaster mit einem länglichen, an einer Trägereinrichtung gehalterten Tastelement, das einen Tastkopf aufweist, welcher zur Meßabtastung quer zur Längsachse des Tastelements verschiebbar ist.

Es sind solche Meßtaster bekannt, bei denen ein Meßtasterstift an einer Trägereinrichtung verschwenkbar gehaltert ist, so daß ein an einem Ende des Meßtasterstiftes angeordneter Tastkopf jeweils eine Bewegung senkrecht zur Längsachse des Meßtasterstifts ausführt.

Durch die Erfindung wird ein neuer Meßtaster der obengenannten Art geschaffen, welcher dadurch gekennzeichnet ist, daß die Trägereinrichtung ein längliches, mit seiner Längsachse zur Längsachse des Tastelements ausrichtbares Trägergehäuse umfaßt.

Gemäß dieser Erfindungslösung wird ein Meßtaster mit quer zur Längsachse des Tastelements zur Meßabtastung verschiebbarem Tastkopf länglich in der Art eines Meßtasters mit in Richtung der Längsachse des Tastelements verschiebbarem Tastkopf ausgebildet. Für letzteren Meßtaster ist die längliche Bauform konstruktiv vorgezeichnet, indem die Meßabtastung durch Verschiebung des Tastelements in Richtung seiner Längsachse erfolgt und damit eine sich mit ihrer Längsausdehnung in Richtung dieser Längsachse erstreckende Trägereinrichtung verwendet wird. Mit der erfindungsgemäßen Angleichung der Bauform eines Meßtasters mit quer zur Längsachse des Tastelements bewegbarem Tastkopf an die Bauform eines Meßtasters mit in Richtung der Längsachse des Tastelements verschiebbarem Tastkopf können in gemischten, eine Vielzahl von Meßtastern umfassenden Meßsystemen für die Meßtaster beider Arten gleiche Halterungen verwendet werden, was den Aufbau solcher Meßsysteme wesentlich erleichtert und insbesondere einen modularen variablen Aufbau solcher Meßsysteme mit baulich übereinstimmenden Halterungsblöcken ermöglicht.

In einer bevorzugten Ausführungsform weist das Trägergehäuse einen Klemmabschnitt zum Einspannen des Meßtasters in eine Meßtasterhalterung mit einem Spanndurchmesser von vorzugsweise 8 mm auf. Meßtasterhalterungen mit einem solchen Spanndurchmesser werden bisher häufig für Meßtaster mit in Richtung der Längsachse des Tastelements verschiebbarem Tastkopf verwendet. Durch die Erfindung können diese Halterungen nun auch für Meßtaster mit quer zur Längsachse des Tastelements verschiebbarem Tastkopf verwendet werden.

In der bevorzugten Ausführungsform der Erfindung weist das Trägergehäuse eine Rohrform mit einem dem Spanndurchmesser entsprechenden Rohraußendurchmesser auf. Das Tastelement mit dem Tastkopf steht dann stirnseitig von dem rohrförmigen Trägergehäuse vor.

Dabei kann vorteilhaft das Tastelement zu der rohrförmigen Trägereinrichtung derart ausrichtbar sein, daß die Querschnittsabmessungen des Meßtasters den Spanndurchmesser über die gesamte Länge des Meßtasters nicht überschreiten. Ein solcher Meßtaster läßt sich dann mit dem Tastkopf voran durch eine Spannbohrung einer Meßtasterhalterung hindurchschieben, was die Montage von Meßsystemen, die eine Vielzahl von Meßtastern und Meßtasterhalterungen enthalten, wesentlich erleichtert. Solche Meßsysteme werden z.B. zur Vermessung von Wellen mit in Richtung der Meßachse variierendem Wellendurchmeser verwendet.

In der bevorzugten Ausführungsform erstreckt sich das Tastelement in das Trägergehäuse hinein und ist in dem Trägergehäuse gegen die Trägergehäuselängsachse verschwenkbar gehaltert. Entsprechend dieser Verschwenkmöglichkeit ist der Außendurchmesser des in das Trägergehäuse hineinstehenden Tastelements wenigstens teilweise geringer als der Innendurchmesser des Trägergehäuses oder eines in dem Trägergehäuse angeordneten Rohreinsatzes.

Vorzugsweise weist der Meßtaster nach der Erfindung eine Einrichtung zur Erzeugung einer durch den Tastkopf auszuübenden Meßandruckkraft auf, welche eine bei der Schwenkachse des Meßfühlers angeordnete Blattfeder umfaßt, die unter Festlegung des Tastelements an der Trägereinrichtung in Richtung zur Trägergehäuselängsachse in einen Schlitz am Tastelement und einen Schlitz an der Trägereinrichtung angreift. In den Meßpositionen des Tastkopfes ist die Blattfeder deformiert, wobei sie ein Drehmoment erzeugt das den Tastkopf gegen das Meßobjekt andrückt.

In der bevorzugten Ausführungsform verjüngt sich das Tastelement von der Schwenkachse an in Richtung seiner Längsachse, wobei eine solche Verjüngung insbesondere nach beiden Längsachsenrichtungen erfolgt. Der maximale Durchmesser des Tastelements liegt dann bei der Schwenkachse und ist etwa gleich dem Innendurchmesser des Trägergehäuses oder eines in dem Trägergehäuse angeordneten Rohreinsatzes.

Zweckmäßig weist der Meßtaster nach der Erfindung eine die Schwenklage des Tastelements erfassende Einrichtung auf, welche wenigstens eine am Tastelement angebrachte Spule für den Eingriff eines an der Trägereinrichtung angebrachten. abhängig von der Eingriffstiefe die Induktivität der Spule verändernden Spulenkerns aufweist. Vorzugsweise ist auf beiden Seiten der Schwenkachse eine solche Spule vorgesehen, deren Induktivitätsmeßsignale, welche für bestimmte Auslenkungen des Tastelements repräsentativ sind, zur genaueren Erfassung der Schwenklage beide ausgewertet werden.

In weiterer Ausgestaltung der Erfindung ist eine Einrichtung zur Verschwenkung des Tastelements vorgesehen, welche eine im Abstand von der Schwenkachse an dem Tastelement mit einer Komponente senkrecht zur Trägergehäuselängsachse angreifende Betätigungseinrichtung umfaßt. Durch diese Betätigungseinrichtung kann der unter dem Einfluß einer Meßkraft gegen ein Meßobjekt anliegende Tastkopf vom Meßobjekt abgehoben werden, z.B. wenn die Abtastung beendet werden soll oder es kann durch die Betätigungseinrichtung eine Meßandruckkraft erzeugt werden.

In einer Ausführungsform weist die Betätigungseinrichtung einen in Richtung der Trägergehäuselängsachse vorschiebbaren Stellblock mit einer an dem Tastelement angreifenden schiefen Ebene auf. Bei Verschiebung des Stellblocks gleitet oder rollt das Tastelement auf der schiefen Ebene und ändert entsprechend seine Schwenkstellung.

In einer anderen Ausführungsform umfaßt die Betätigungseinrichtung wenigstens einen flexiblen, unter Einwirkung auf das Tastelement mit Druck beaufschlagbaren Druckschlauch. Insbesondere können mehrere Druckschläuche, die insbesondere in bezug auf das Tastelement einander gegenüberliegend angeordnet sind, vorgesehen sein. Mit zwei einander gegenüberliegenden Druckschläuchen kann so das Tastelement über den an den beiden Druckschläuchen anliegenden Druck unabhängig von einer einwirkenden rücktreibenden Federkraft in jede beliebige Schwenkstellung bewegt werden.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: ein Ausführungsbeispiel für einen erfindungsgemäßen Meßtaster in einer auf die Schwenkebene eines Tastelements gerichteten Ansicht,
- Fig. 2: den Meßtaster von Fig. 1 in einer zur der Ansicht von Fig. 1 senkrechten Ansicht,
- Fig. 3: ein weiteres Ausführungsbeispiel für einen erfindungsgemäßen Meßtaster in einer der Fig. 1 entsprechenden Ansicht, und
- Fig. 4: den Meßtaster von Fig. 3 in einer Fig. 2 entsprechenden Ansicht.

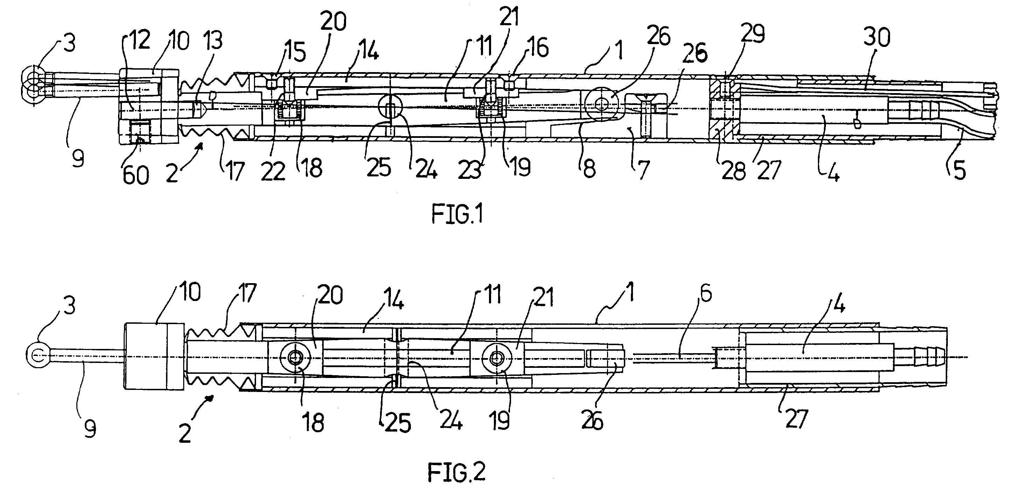

Mit dem Bezugszeichen 1 ist in den Fig. 1 und 2 ein rohrförmiges Trägergehäuse bezeichnet. In das Trägergehäuse hinein erstreckt sich ein Tastelement 2 mit einem Tastkopf 3. Auf der dem Tastelement 2 abgewandten Seite des rohrförmigen Trägergehäuses 1 erstreckt sich in das Trägergehäuse 1 ein Druckzylinder 4 mit einem angeschlossenen Druckschlauch 5. Eine Kolbenstange 6 des Druckzylinders 4 ist mit einem Stellblock 7 verbindbar, welcher eine schiefe Ebene 8 aufweist.

Im einzelnen besteht das Tastelement 2 aus einem den Tastkopf 3 tragenden Stift 9, einem damit verbundenen Verbindungsblock 10 und einem sich im wesentlichen innerhalb des Trägergehäuses 1 erstreckenden Teil 11. Der Verbindungsblock 10 ist an dem Teil 11 des Tastelements 2 über eine kopflose Feststellschraube 60 und einen Stift 12, welcher in eine stirnseitig in den Teil 11 eingebrachte Bohrung 13 hineinsteht, befestigt.

Mit dem Bezugszeichen 14 ist ein mit Schrauben 15 und 16 innerhalb des Trägergehäuses 1 befestigter Rohreinsatz bezeichnet.

Zwischen dem Verbindungsblock 10 und dem Trägergehäuse 1 erstreckt sich ein Schutzbalg 17, welcher den aus dem Trägergehäuse 1 vorstehenden Abschnitt des Tastelementteils 11 abdeckt und unter Abdichtung der dem Verbindungsblock 10 zugewandten Öffnung des Trägergehäuses 1 zugewandten Öffnung etwas in das Trägergehäuse 1 hineinragt.

Mit dem Bezugszeichen 18 und 19 sind Spulen bezeichnet, die in Ausnehmungsbereichen 20 und 21 des Tastelements in den Tastelementteil 11 eingelassen sind.

An dem Rohreinsatz 14 sind nach innen vorstehende Stifte 22 und 23 angebracht, welche unter Bildung eines Spulenkerns über einen Teil der axialen Spulenlänge in die Spulen 18 und 19 hineinragen.

Mit dem Bezugszeichen 24 ist eine sich durch den Tastelementteil 11 erstreckende Bohrung mit einem seitlichen Schlitz bezeichnet, in welchen eine Blattfeder 25 eingreift, welche unter Festlegung des Tastelements 2 innerhalb des Trägergehäuses 1 ferner in einen Schlitz im Rohreinsatz 14 eingreift und mit dem Tastelement 2 unter Verwendung eines Lasers verschweißt ist.

Der Tastelementteil 11 weist an der Stelle der Feder seinen maximalen Durchmesser auf, der etwa dem Innendurchmesser des Rohreinsatzes 14 entspricht. Wie Fig. 1 und 2 zu entnehmen ist, verringert sich der Durchmesser mit wachsendem Abstand von der Blattfeder 25. Damit besteht die Möglichkeit zur Verschwenkung des Tastelements 2 innerhalb des Trägergehäuses 1 bzw. Rohreinsatzes 14 um eine bei der Blattfeder 25 gebildete Schwenkachse.

Die Spulen 18 und 19 sind symmetrisch zur Schwenkachse bzw. Blattfeder 25 angeordnet.

Mit dem Bezugszeichen 26 ist eine durch ein Kugellager gebildete Rolle bezeichnet, die an dem dem Verbindungsblock 10 abgewandten Ende des Tastelementteils 11 angebracht ist und gegen die schiefe Ebene 8 des Stellblocks 7 anliegt.

Das Bezugszeichen 27 bezeichnet ein in das Trägergehäuse 1 eingeführtes Muffenrohr mit einem Stirnblock 28, über welchen das Muffenrohr durch eine Senkkopfschraube 29 in dem Trägergehäuse 1 befestigt ist. Der Stirnblock 28 weist ein Durchgangsgewinde auf, in welches der Druckzylinder 4 mit einem Endteil eingedreht und damit am Meßtaster befestigt ist. Mit dem Bezugszeichen 30 ist eine Spulenzuführungsleitung bezeichnet. Weitere drei solcher Spulenzuführungsleitungen sowie dafür vorgesehene Verlegungskanäle sind in den Fig. 1 und 2 nicht dargestellt.

Zur Meßabtastung wird der in den Fig. 1 und 2 dargestellte Meßtaster in eine Meßtasterhalterung eingeführt, wobei er z.B. mit dem Tastkopf voran durch eine Spannbohrung hindurchgeführt werden kann, welche dann an dem Trägergehäuse 1 unter Festspannung des Meßtasters angreift. Eine solche Montage des Meßtasters ist möglich, weil die dem Trägergehäuse 1 vorangehenden Teile des Meßtasters in ihren auf die Längsachse des Trägergehäuses bezogenen Querschnittsabmessungen, zumindest in einer der möglichen Schwenkstellungen des Tastelements, den Durchmesser des Trägergehäuses nicht überschreiten.

In der Meßstellung liegt der Tastkopf 3 gegen ein Werkstück an, z.B. einen Stufenabsatz einer Welle, wobei über die Blattfeder 24 ein Drehmoment erzeugt wird, so daß der Tastkopf 3 eine geeignete Meßandruckkraft auf das Meßobjekt in einer Richtung senkrecht zur Meßtasterlängsachse ausübt.

In den jeweiligen Schwenkstellungen des Tastelements 2 nehmen die Spulenkernstifte 22 und 23 jeweils eine bestimmte Stellung ein, die einer bestimmten Induktivität der Spulen 18 und 19 entspricht. Dementsprechend besteht ein funktionaler Zusammenhang zwischen der Position des Tastkopfs 3 und den Induktivitäten der Spulen 18 und 19, anhand welcher eine in den Fig. 1 und 2 nicht gezeigte elektronische Auswerteinrichtung, in der der genannte Zusammenhang gespeichert ist, an einem Meßobjekt abgenommene Positionswerte ermitteln kann.

Zur Ermittlung solcher Werte würde eine Spule bereits ausreichen. Durch Verwendung zweier Spulen läßt sich die Meßgenauigkeit erhöhen.

Um den Tastkopf 3 nach Abschluß der Messung von einem Meßobjekt abzuheben, wird über den Druckzylinder 4 und dessen Kolbenstange 5 der Stellblock 7 in Richtung der Längsachse des Trägergehäuses 1 vorwärtsbewegt, wobei das Kugellager 26 auf der schiefen Ebene 8 des Stellblocks unter Verschwenkung des Tastelements 2 gegen das Drehmoment der Blattfeder 25 abrollt.

Nach dieser Verschwenkung kann z.B. das Meßobjekt entfernt und ein neues Meßobjekt zur Abtastung positioniert werden. Danach wird der Stellblock 7 zurückgefahren, wobei das Kugellager 26 auf der schiefen Ebene abrollt und sich nach Verschwenkung des Tastelements 2 der Tastkopf 3 unter der Wirkung der Blattfeder 24 gegen das Meßobjekt andrückt.

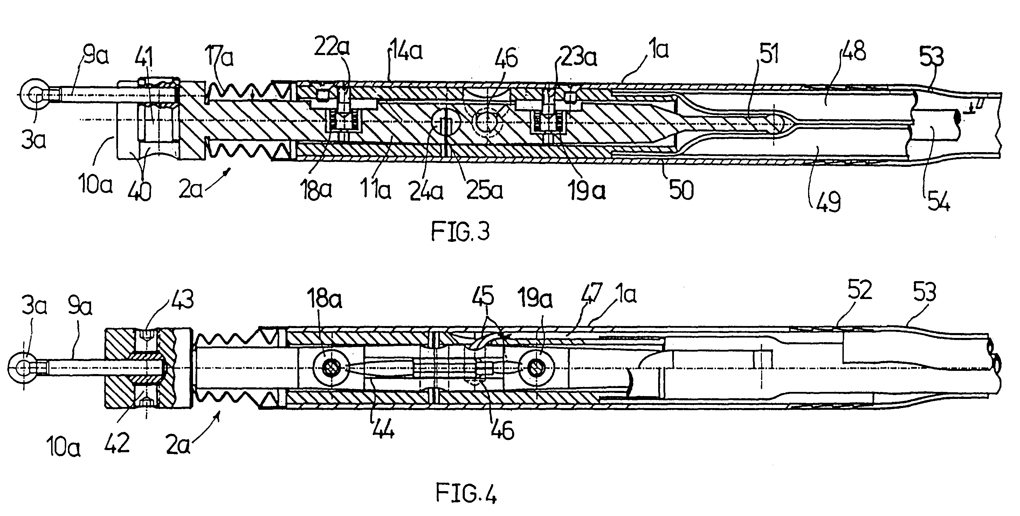

Es wird nun auf die Fig. 3 und 4 Bezug genommen, wo gleiche oder gleichwirkende Teile mit derselben, jedoch mit dem Buchstaben a versehenen Bezugszahl wie in den Fig. 1 und 2 bezeichnet sind. Auf die betreffenden Teile wird daher nicht weiter eingegangen.

Das in den Fig. 3 und 4 gezeigte Ausführungsbeispiel unterscheidet sich von dem Ausführungsbeispiel gemäß den Fig. 1 und 2 darin, daß ein Verbindungsblock 10a einstückig mit einem Teil 11a eines Tastelements 2a, das in ein Trägergehäuse 1a hineinsteht, verbunden ist. In den Verbindungsblock 10a ist eine zu einem Tastkopf 3a hin geschlitzte Führung 40 vorgesehen, in welchem ein Buchsenteil 41, das mit einem den Tastkopf 3a tragenden Taststift 9a verbunden ist, geführt ist. Das Buchsenteil 41 und damit der Taststift 9a sind über kopflose Druckschrauben 42 und 43 in einer gewünschten Stellung innerhalb der Bohrung 40 fixierbar.

Mit dem Bezugszeichen 44 ist ein in dem Tastelement 2a vorgesehener Längskanal bezeichnet, in welchem Anschlußleitungen 45 für die Spulen 22a und 23a geführt sind. Die Anschlußleitungen 45 sind durch eine radiale Bohrung 46 aus dem Tastelement 2a herausgeführt und verlaufen dann in einem zwischen einem Rohreinsatz 14a und der Gehäusewand des Trägergehäuses 1a gebildeten Kanal 47.

Mit dem Bezugszeichen 48 und 49 sind Druckschläuche bezeichnet, welche an ihren dem Tastkopf 3a zugewandten Enden in einer zwischen dem Rohreinsatz 14a und der Wand des Trägergehäuses 1a gebildeten Ringtasche 50 zusammengedrückt und abgedichtet sind. Zwischen den Druckschläuchen 48 und 49 ist ein Endteil 51 des Tastelements 2a angeordnet. Die Druckschläuche 48 und 49 stehen mit einer nicht gezeigten Druckquelle in Verbindung und sind mit unterschiedlichem Druck beaufschlagbar.

In dem gezeigten Ausführungsbeispiel weist das Trägergehäuse 1a an seinem dem Tastkopf 3a abgewandten Ende ein Muffenteil 52 auf, an dem ein Schlauch 53 aufgesteckt sind, in welchem neben den Schläuchen 48 und 49 ein weiterer Schlauch 54 geführt ist, der die Anschlußleitungen 45 für die Spulen 22a und 23a aufnimmt.

Über die Druckschläuche 48 und 49, die mit unterschiedlichem Druck beaufschlagbar sind, kann das Tastelement 2a verschwenkt und der Tastkopf 3a in jede beliebige Stellung innerhalb des geometrisch möglichen Schwenkbereiches gebracht werden. Bei Beendigung einer Meßabtastung wird über die Druckschläuche der Tastkopf 3a vom Meßobjekt abgehoben. Bei diesem Ausführungsbeispiel wird die Meßandruckkraft über die Druckschläuche erzeugt. Die Blattfeder 25a erzeugt eine rücktreibende Kraft in eine Mittelstellung des Tastelements. In der Mittelstellung ist die Blattfeder entspannt.

## Patentansprüche

1. Meßtaster mit einem länglichen, an einer Trägereinrichtung gehalterten Tastelement (2), das einen Tastkopf (3) aufweist weicher zur Meßabtastung quer zur Längsachse des Tastelements verschiebbar ist,
dadurch gekennzeichnet,
daß die Trägereinrichtung ein längliches, mit seiner Längsachse zur Längsachse des Tastelements (2a) ausrichtbares Trägergehäuse (1) umfaßt.

2. Meßtaster nach Anspruch 1,
dadurch gekennzeichnet,
daß das Trägergehäuse (1) einen Klemmabschnitt zum Einspannen des Meßtasters in eine Meßtasterhalterung mit einem Spanndurchmesser von vorzugsweise 8 mm aufweist.

3. Meßtaster nach Anspruch 1 oder 2,
dadurch gekennzeichnet,
daß das Trägergehäuse (1) rohrförmigen mit einem dem Spanndurchmesser entsprechenden Rohrdurchmesser ausgebildet ist.

4. Meßtaster nach Anspruch 3,
dadurch gekennzeichnet,
daß das Tastelement (2) zu der Trägereinrichtung derart ausrichtbar ist, daß die Querschnittsabmessungen des Meßtasters den Spanndurchmesser an keinem Punkt der Meßtasterlängsachse überschreiten.

5. Meßtaster nach einem der Ansprüche 1 bis 4,
dadurch gekennzeichnet,
daß sich das Tastelement (2) in das Trägergehäuse (1) hinein erstreckt und in dem Trägergehäuse gegen die Trägergehäuselängsachse verschwenkbar gehaltert ist.

6. Meßtaster nach einem der Ansprüche 1 bis 5.
dadurch gekennzeichnet,
daß eine Einrichtung zur Erzeugung einer durch den Tastkopf (3) auszuübenden Meßandruckkraft vorgesehen ist.

7. Meßtaster nach Anspruch 6,
dadurch gekennzeichnet,
daß die Einrichtung zur Erzeugung der Meßandruckkraft eine bei der Schwenkachse des Meßtasters (2) angeordnete Blattfeder (25) umfaßt, welche unter Festlegung des Tastelements an der Trägereinrichtung in Richtung zur Trägergehäuselängsachse in einen Schlitz am Tastelement (2) und einen Schlitz an der Trägereinrichtung eingreift.

8. Meßtaster nach einem der Ansprüche 5 bis 7,
dadurch gekennzeichnet,
daß sich das Tastelement (2) von der Schwenkachse an in Richtung seiner Längsachse, insbesondere nach beiden Längsachsenrichtungen hin. verjüngt und der Durchmesser des Tastelements (2) etwa gleich dem Innendurchmesser des Trägergehäuses (1) oder eines in dem Trägergehäuse angeordneten Rohreinsatzes (14) ist.

9. Meßtaster nach einem der Ansprüche 1 bis 8,
dadurch gekennzeichnet,
daß eine die Schwenklage des Tastelements erfassende Einrichtung vorgesehen ist.

10. Meßtaster nach Anspruch 9,
dadurch gekennzeichnet,
daß die Einrichtung zur Erfassung der Schwenklage wenigstens eine am Tastelement (2) angebrachte Spule (18,19) umfaßt, in die ein an der Trägereinrichtung angebrachtes, abhängig von der Eingriffstiefe die Induktivität der Spule verändernder Spulenkern (22,23) eingreift.

11. Betätigungseinrichtung zum Bewegen des Tastelements eines Meßtasters,
gekennzeichnet durch flexible, an dem Tastelement angreifende, zur Bewegung des Tastelements unterschiedlich mit Innendruck beaufschlagbare Betätigungselemente (48,49).

12. Betätigungseinrichtung nach Anspruch 11,
dadurch gekennzeichnet,
daß die Betätigungselemente Schläuche (48,49) umfassen, die mit ihrer Schlauchwand gegen das Tastelement (2a) anliegen.
